# EUROPÄISCHE PATENTANMELDUNG

(11) **EP 0 712 749 A1**
(43) Veröffentlichungstag der Anmeldung: **22.05.1996**
(21) Anmeldenummer: 95118084.3
(22) Anmeldetag: 16.11.1995
(51) Int. Cl.: B60J 10/08, B60J 10/06

(54) **Fensterführungsprofil für eine bewegliche Fensterscheibe**

(30) Priorität: 21.11.1994 DE 4441346
(71) Anmelder: METZELER Automotive Profiles GmbH, D-88131 Lindau (DE)
(72) Erfinder: Körber, Hans, D-88085 Langenargen (DE); Ewae, Reinhard, D-88167 Röthenbach (DE); Bonne, Andreas, D-88099 Neukirch (DE)
(74) Vertreter: Preissner, Nicolaus, Dipl.-Ing.

(57) **Zusammenfassung**

Ein Fensterführungsprofil (10) für eine bewegliche Fensterscheibe (16), insbesondere bei einem Kraftfahrzeug, weist einen Grundkörper (11) aus einem elastomeren Material auf. Der Grundkörper (11) ist an einem die Fensteröffnung umschließenden Rahmen (13) festlegbar. An dem Grundkörper (11) ist eine Hohlkammer (26) ausgebildet, die durch ein mit der Stirnseite (25) der Fensterscheibe (16) zusammenwirkendes Spannband begrenzt ist. Das Spannband ist mit einer äußeren Dichtlippe (20) verbunden, die durch die Schließbewegung der Fensterscheibe (16) an deren Außenseite herangezogen wird. Um beim Schließen der Scheibe trotz hoher Dichtkräfte die Eintauchkräfte zu verringern, ist erfindungsgemäß das Spannband als Kniehebel-Gelenkanordnung (21) ausgebildet, die einen mit der äußeren Dichtlippe (20) verbundenen ersten Kniehebel (22) und einen mit dem Grundkörper (11) verbundenen zweiten Kniehebel (23) aufweist. Beim Eintauchen der Fensterscheibe (16) in die Hohlkammer (26) des Fensterführungsprofils (10) wird die äußere Dichtlippe (20) zunächst nach außen geschwenkt.

## Beschreibung

Die Erfindung betrifft ein Fensterführungsprofil für eine bewegliche Fensterscheibe, insbesondere bei einem Kraftfahrzeug, mit einem Grundkörper aus einem elastomeren Material, der an einem die Fensteröffnung umschließenden Rahmen festlegbar ist, wobei am Grundkörper eine Hohlkammer ausgebildet ist, die durch ein mit der Stirnseite der Fensterscheibe zusammenwirkendes Spannband begrenzt ist, und wobei das Spannband mit einer äußeren Dichtlippe verbunden ist, die durch die Schließbewegung der Fensterscheibe an deren Außenseite herangezogen wird.

Ein derartiges Fensterführungsprofil ist aus der DE 4015928 A1 bekannt. Dieses aus einem elastomeren Material extrudierte Fensterführungsprofil weist einen Grundkörper auf, an dem ein Klemmbereich zur Festlegung an einem die Fensteröffnung umschließenden Rahmen vorgesehen ist. Weiterhin ist an dem Grundkörper eine Hohlkammer ausgebildet, die durch ein mit der Fensterscheibe zusammenwirkendes Spannband begrenzt ist. Außenseitig ist das Spannband mit einer Dichtlippe verbunden, die in der Endphase der Schließbewegung der Fensterscheibe durch das Spannband an die Außenseite der Fensterscheibe herangezogen wird. An dem extrudierten Grundkörper ist weiterhin eine an der Innenseite der Fensterscheibe anliegende Dichtlippe und eine Dichtleiste vorgesehen, die zur Abdichtung des zwischen Dachunterkante und Fahrzeugtür vorgesehenen Spaltes konzipiert ist. Bei dem bekannten Fensterführungsprofil treten relativ hohe Eintauchkräfte bei geringem Eintauch wegen der Scheibe auf.

Der Erfindung liegt die Aufgabe zugrunde, ein Fensterführungsprofil vorzuschlagen, bei dem beim Schließen der Scheibe die Eintauchkräfte reduziert sind.

Zur Lösung dieser Aufgabe wird bei einem Fensterführungsprofil der eingangs genannten Art erfindungsgemäß vorgeschlagen, daß das Spannband als Kniehebel-Gelenkanordnung ausgebildet ist, die einen mit der äußeren Dichtlippe verbundenen ersten Kniehebel und einen mit dem Grundkörper verbundenen zweiten Kniehebel aufweist.

Ein wesentlicher Vorteil des erfindungsgemäßen Fensterführungsprofils liegt darin, daß trotz hoher Dichtkräfte lediglich geringe Schließkräfte zum Schließen der Scheibe erforderlich sind. Darüber hinaus ist durch die Kniehebel-Gelenkanordnung eine gezielte Steuerung der Bewegung der äußeren Dichtlippe möglich.

Vorteilhaft sind die Kniehebel der Kniehebel-Gelenkanordnung im wesentlichen drucksteif ausgebildet.

In weiterer Ausgestaltung wird vorgeschlagen, daß ein Kniehebel-Gelenk im Bereich der Stirnseite der Fensterscheibe angeordnet ist.

Vorteilhaft ist die Kniehebel-Gelenkanordnung derart ausgebildet, daß die äußere Dichtlippe ausgehend von der Ausgangsstellung der Kniehebel-Gelenkanordnung bei der Schließbewegung der Fensterscheibe zunächst nach außen geführt wird. Hierdurch wird erreicht, daß beim Eintauchen der Fensterscheibe in das Fensterführungsprofil ein ausreichender Sicherheitsabstand zwischen der Fensterscheibe und der Dichtlippe vorliegt.

Vorteilhaft ist der erste Kniehebel über ein Gelenk am Basisbereich der äußeren Dichtlippe angelenkt. Hierdurch wird bei Betätigung des Kniehebels aufgrund der Hebelwirkung eine große Auslenkbewegung der äußeren Dichtlippe erzielt.

Zweckmäßig ist auch der zweite Kniehebel über ein Gelenk mit dem Grundkörper verbunden.

Weiterhin wird vorgeschlagen, daß der zweite Kniehebel am freien Ende einer elastisch vom Grundkörper abragenden Nase angelenkt ist.

Vorteilhaft weist die Nase am freien Ende einen Weichmaterial-Bereich und am Sockel einen Hartmaterial-Bereich auf. Somit wird beim Eintauchen der Scheibe aufgrund der Elastizität des Weichmaterial-Bereiches ein Verschwenken des Endbereiches zum Grundkörper möglich. Bei der weiteren Eintauchbewegung gewährleistet der Hartmaterial-Bereich eine hohe Steifigkeit, sodaß erst in der Endphase der Eintauchbewegung ein Ausrücken der Nase erfolgt.

Zweckmäßig sind die am Spannband vorgesehenen Gelenke als Einschnürungen ausgebildet. Somit kann das erfindungsgemäße Fensterführungsprofil als einteiliges Extrudat hergestellt werden.

In weiterer Ausgestaltung kann das Spannband an seinem der Fensterscheibe gegenüberliegenden Bereich eine Gleitbeschichtung, insbesondere eine Beflockung oder eine Gleitlackbeschichtung, aufweisen.

Vorteilhaft ist das Spannband aus einem Material geringerer Härte als der übrige Grundkörper hergestellt. Hierdurch wird eine besonders gute Anpassung des Spannbandes an die Stirnseite der Fensterscheibe in deren Schließstellung erreicht.

In Weiterbildung wird vorgeschlagen, daß das Spannband drei gelenkig miteinander verbundene Kniehebel aufweist. Hierdurch wird eine besonders gezielte Steuerung des Bewegungsablaufes möglich.

Bei einer vorteilhaften Ausführungsform weist die Kniehebel-Gelenkanordnung in ihrer Ausgangsstellung näherungsweise V-förmig in Richtung der Stirnseite der Fensterscheibe ausgerichtete Kniehebel auf, die durch ein im Bereich der Stirnseite der Fensterscheibe angeordnetes Kniegelenk verbunden sind. Beim Eintauchen der Fensterscheibe in das Fensterführungsprofil gerät somit die Stirnseite der Fensterscheibe in Kontakt mit der Kniehebel-Gelenkanordnung. Die zunächst V-förmig angeordneten Kniehebel werden hierdurch näherungsweise horizontal ausgerichtet, wobei die mit dem ersten Kniehebel verbundene äußere Dichtlippe zunächst nach außen geführt wird. Hierdurch wird ein ausreichender Sicherheitsabstand zwischen der Fensterscheibe und der äußeren Dichtlippe erreicht. Bei der weiteren Eintauchbewegung der Fensterscheibe kommt es zu einem Umkippen der Kniehebel in eine umgekehrte V-Stellung. Hierbei wird die äußere Dichtlippe nach innen gezogen und an die Außenseite der Fensterscheibe angelegt. In der Schließstellung der Fensterscheibe liegt die Kniehebel-Gelenkanordnung fest an deren Stirnseite an.

Die Erfindung wird nachfolgend anhand einer vorteilhaften Ausführungsform näher erläutert, die in schematischer Weise in der Zeichnung dargestellt ist. Hierin zeigen:
- Fig. 1: einen Vertikalschnitt durch ein erfindungsgemäßes Fensterführungsprofil, das an dem Metallrahmen einer Fahrzeugtür festgelegt ist;
- Fig. 2: eine vergrößerte Darstellung der Einzelheit II in Fig. 1;
- Fig. 3: eine vergrößerte Darstellung der Kniehebel-Gelenkanordnung des Fensterführungsprofils gemäß Fig. 1 am Anfang der Eintauchbewegung der Fensterscheibe;
- Fig. 4: eine ähnliche Darstellung wie Fig. 3 bei einer Zwischenstellung der Kniehebel-Gelenkanordnung, und
- Fig. 5: eine ähnliche Darstellung wie Fig. 3 in der Schließstellung der Fensterscheibe.

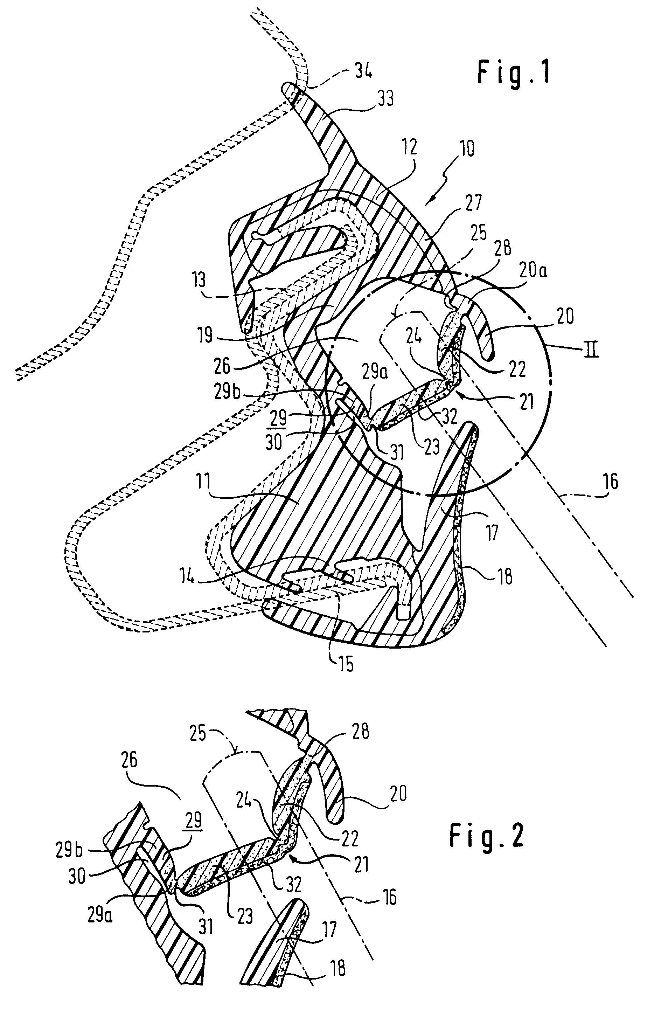

Fig. 1 zeigt einen Vertikalschnitt durch ein Fensterführungsprofil 10, das der Führung und Abdichtung einer Fensterscheibe 16 dient, die in einer nicht näher dargestellten Fahrzeugtür beweglich angeordnet ist. Das Fensterführungsprofil 10 weist einen Grundkörper 11 auf, der aus einem elastomeren Material einteilig extrudiert ist. An dem Grundkörper 11 ist ein erster Klemmbereich 12 ausgebildet, der der Festlegung an einem U-förmigen Bereich des Fensterrahmens 13 dient. Weiterhin weist der Grundkörper 11 einen zweiten Klemmbereich 14 auf, der zur Festlegung an einem Steg 15 des Fensterrahmens 13 konzipiert ist.

An dem Fensterführungsprofil 10 ist eine Hohlkammer 26 ausgebildet, die einerseits von einem inneren Steg 19 und andererseits von einer Kniehebel-Gelenkanordnung 21 begrenzt ist. Wie aus Fig. 1 hervorgeht, schmiegt sich der innere Steg 19 im wesentlichen an den Fensterrahmen 13 an.

Die Kniehebel-Gelenkanordnung 21 besitzt zwei Kniehebel 22, 23, die durch ein Kniehebelgelenk 24 gelenkig miteinander verbunden sind. Die beiden Kniehebel 22, 23 sind im wesentlichen drucksteif ausgebildet.

Am freien Ende eines Profilbereiches 27 des Fensterführungsprofils 10 ist eine äußere Dichtlippe 20 elastisch angelenkt. Der Basisbereich 20a der äußeren Dichtlippe 20 ist mit dem ersten Kniehebel 22 gelenkig verbunden. Hierbei ist im Verbindungsbereich ein als Einschnürung ausgebildetes Gelenk 28 vorgesehen.

Der zweite Kniehebel 23 ist am freien Ende einer Nase 29 angelenkt, die mit dem inneren Steg 19 verbunden ist. Am freien Ende der Nase 29 ist ein Weichmaterial-Bereich 29a vorgesehen, wodurch dieser Bereich eine erhöhte Elastizität aufweist. Demgegenüber ist der Basisbereich der Nase 29 mit einem Hartmaterial-Bereich 29a ausgebildet. Zwischen der Nase 29 und dem Grundkörper 11 ist ein länglicher Spalt 30 vorgesehen. Die Anlenkung des zweiten Kniehebels 23 erfolgt an einem als Einschnürung ausgebildeten Gelenk 31. Auf der der Stirnseite 25 der Fensterscheibe 16 zugewandten Seite weist die Kniehebel-Gelenkanordnung 21 eine Beflockung 32 auf.

Weiterhin ist an dem Grundkörper 11 des Fensterführungsprofils 10 eine innere Dichtlippe 17 vorgesehen, die an der Innenseite der Fensterscheibe 16 anliegt. Zur Reibungsverminderung weist die innere Dichtlippe 17 eine Beflockung 18 auf.

An den ersten Klemmbereich 12 des Grundkörpers 11 schließt sich eine Dichtleiste 33 an, die der Abdichtung des Türspaltes dient und in der Schließstellung der Fahrzeugtür an einer Dachunterkante 34 anliegt.

Nachfolgend soll die nähere Ausgestaltung der Kniehebel-Gelenkanordnung 21 beschrieben werden. Wie aus Fig. 2 hervorgeht, die eine vergrößerte Darstellung der Einzelheit II in Fig. 1 zeigt, sind die Kniehebel 22, 23 der Kniehebel-Gelenkanordnung 21 vor dem Eintauchen der Fensterscheibe 16 zunächst näherungsweise V-förmig ausgerichtet. Der mit der äußeren Dichtlippe 20 verbundene erste Kniehebel 22 schließt mit der Außenseite der Fensterscheibe 16 näherungsweise einen Winkel von etwa 45° ein. Demgegenüber ist der zweite Kniehebel 23, der mit der Nase 29 verbunden ist, näherungsweise senkrecht zur Innenseite der Fensterscheibe 16 ausgerichtet.

Die Kniehebel 22, 23 sind mit einem Material geringerer Härte als der restliche Grundkörper 11 ausgebildet. Hierdurch wird beim Kontakt mit der Fensterscheibe 16 eine gute Anschmiegung an deren Stirnseite 25 erreicht.

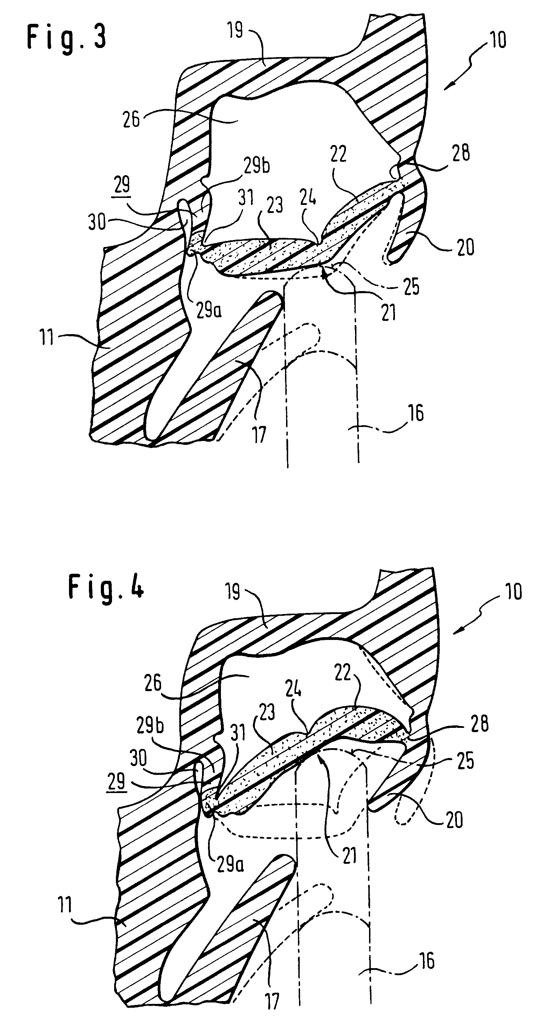

Anhand der Figuren 3 bis 5 soll nun die Funktion der Kniehebel-Gelenkanordnung 21 näher erläutert werden. Hierbei ist in allen vorgenannten Figuren die Ausgangsstellung der Kniehebel-Gelenkanordnung 21, der äußeren Dichtlippe 20 und der inneren Dichtlippe 17 gestrichelt eingezeichnet.

Fig. 3 zeigt die Kniehebel-Gelenkanordnung 21 in der Anfangsphase der Eintauchbewegung der Fensterscheibe 16 in die Hohlkammer 26 des Fensterführungsprofils 10. Hierbei ist die Kniehebel-Gelenkanordnung 21 geringfügig gegenüber ihrer Ausgangsstellung in Richtung des inneren Steges 19 versetzt. Die äußere Dichtlippe 20 ist aus ihrer Ausgangsstellung bereits geringfügig nach außen geführt, sodaß sich der Eintauchspalt für die eintauchende Fensterscheibe 16 vergrößert. Die Nase 29 wird hierbei an die Außenseite des Grundkörpers 11 geführt, was durch den endseitigen elastischen Weichmaterial-Bereich 29a der Nase 29 begünstigt wird. Somit liegt in diesem Bereich der Kniehebel-Gelenkanordnung 21 ein Festlager vor.

Bei der weiteren Eintauchbewegung der Fensterscheibe 16 in die Hohlkammer 26 werden die Kniehebel 22, 23 in eine gestreckte Lage überführt, sodaß die Kniehebel 22, 23 näherungsweise in einer gestreckten Lage ausgerichtet sind. In dieser Position der Kniehebel-Gelenkanordnung 21 nimmt die äußere Dichtlippe 20 eine maximale Auslenkstellung ein. Somit steht zum Eintauchen der Fensterscheibe 16 ein ausreichender Sicherheitsabstand gegenüber der äußeren Dichtlippe 20 zur Verfügung.

Fig. 4 zeigt die Ausrichtung der Kniehebel-Gelenkanordnung 21 in einer Übergangsstellung während der Eintauchbewegung der Fensterscheibe 16. Wie aus dieser Darstellung hervorgeht, werden beim weiteren Eintauchen der Fensterscheibe 16 in die Hohlkammer 26 die Kniehebel 22, 23 in eine umgekehrte V-Stellung überführt. Der zweite Kniehebel 23 führt hierbei eine Schwenkbewegung im Gegenuhrzeigersinn an dem Gelenk 31 aus. Der erste Kniehebel 22 schwenkt die äußere Dichtlippe 20 an die Außenseite der Fensterscheibe 16.

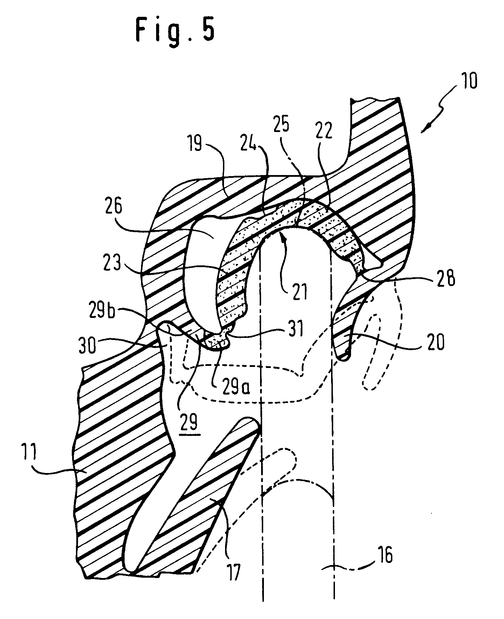

Fig. 5 zeigt die Position der Kniehebel-Gelenkanordnung 21 in der Schließstellung der Fensterscheibe 16. Hierbei ist die Fensterscheibe 16 in die Tiefe der Hohlkammer 26 eingetaucht. Wie aus dieser Darstellung hervorgeht, liegen die Kniehebel 22,23 an der Stirnseite 25 der Fensterscheibe 16 an. Die elastische Kniehebel-Gelenkanordnung 21 ist hierbei über die Stirnseite 25 der Fensterscheibe 16 verspannt. Die elastische Nase 29 wird unter Öffnung des Spaltes 30 in das Innere der Hohlkammer 26 gezogen. Der erste Kniehebel 22 presst die äußere Dichtlippe 20 an die Außenseite der Fensterscheibe 16 an. Der innere Steg 19 des Fensterführungsprofils 10 wirkt hierbei als Widerlager, der die weitere Eintauchbewegung der Fensterscheibe 16 begrenzt.

Durch die Ausgestaltung des Spannbandes als Kniehebel-Gelenkanordnung 21 sind trotz hoher Dichtkräfte, insbesondere im Bereich der äußeren Dichtlippe 20, nur relativ geringe Schließkräfte erforderlich. Darüber hinaus ermöglichen die drucksteif ausgebildeten Kniehebel 22, 23 ein Verschwenken der äußeren Dichtlippe 20 nach außen, um einen ausreichenden Sicherheitsabstand beim Eintauchen der Fensterscheibe 16 zu gewährleisten.

## Patentansprüche

1. Fensterführungsprofil (10) für eine bewegliche Fensterscheibe (16), insbesondere bei einem Kraftfahrzeug, mit einem Grundkörper (11) aus einem elastomeren Material, der an einem die Fensteröffnung umschließenden Rahmen (13) festlegbar ist, wobei am Grundkörper (11) eine Hohlkammer (26) ausgebildet ist, die durch ein mit der Stirnseite (25) der Fensterscheibe (16) zusammenwirkendes Spannband begrenzt ist, und wobei das Spannband mit einer äußeren Dichtlippe (20) verbunden ist, die durch die Schließbewegung der Fensterscheibe (16) an deren Außenseite herangezogen wird, dadurch gekennzeichnet, daß das Spannband als Kniehebel-Gelenkanordnung (21) ausgebildet ist, die einen mit der äußeren Dichtlippe (20) verbundenen ersten Kniehebel (22) und einen mit dem Grundkörper (11) verbundenen zweiten Kniehebel (23) aufweist.

2. Fensterführungsprofil (10) nach Anspruch 1, dadurch gekennzeichnet, daß die Kniehebel (22, 23) der Kniehebel-Gelenkanordnung (21) im wesentlichen drucksteif ausgebildet sind.

3. Fensterführungsprofil (10) nach Anspruch 1 oder 2, dadurch gekennzeichnet, daß ein Kniehebelgelenk (24) im Bereich der Stirnseite (25) der Fensterscheibe (16) angeordnet ist.

4. Fensterführungsprofil (10) nach einem der vorhergehenden Ansprüche, dadurch gekennzeichnet, daß die Kniehebel-Gelenkanordnung (21) derart ausgebildet ist, daß die äußere Dichtlippe (20) ausgehend von der Ausgangsstellung der Kniehebel-Gelenkanordnung (21) bei der Schließbewegung der Fensterscheibe (16) zunächst nach außen geführt wird.

5. Fensterführungsprofil (10) nach einem der vorhergehenden Ansprüche, dadurch gekennzeichnet, daß der erste Kniehebel (22) über ein Gelenk am Basisbereich der äußeren Dichtlippe (20) angelenkt ist.

6. Fensterführungsprofil (10) nach einem der Ansprüche 1 bis 5, dadurch gekennzeichnet, daß der zweite Kniehebel (23) über ein Gelenk (31) mit dem Grundkörper (11) verbunden ist.

7. Fensterführungsprofil (10) nach Anspruch 6, dadurch gekennzeichnet, daß der zweite Kniehebel (23) am freien Ende einer elastisch vom Grundkörper (11) abragenden Nase (29) angelenkt ist.

8. Fensterführungsprofil nach Anspruch 7, dadurch gekennzeichnet, daß die Nase (29) am freien Ende einen Weichmaterial-Bereich (29a) und am Sockel einen Hartmaterial-Bereich (29b) aufweist.

9. Fensterführungsprofil (10) nach einem der vorhergehenden Ansprüche, dadurch gekennzeichnet, daß die am Spannband vorgesehenen Gelenke (24, 28, 31) als Einschnürungen ausgebildet sind.

10. Fensterführungsprofil (10) nach einem der vorhergehenden Ansprüche, dadurch gekennzeichnet, daß das Spannband an seinem der Fensterscheibe (16) gegenüberliegenden Bereich eine Gleitbeschichtung (32), insbesondere eine Beflockung oder eine Gleitlackbeschichtung, aufweist.

11. Fensterführungsprofil (10) nach einem der vorhergehenden Ansprüche, dadurch gekennzeichnet, daß das Spannband aus einem Material geringerer Härte als der übrige Grundkörper (11) hergestellt ist.

12. Fensterführungsprofil (10) nach einem der vorhergehenden Ansprüche, dadurch gekennzeichnet, daß das Spannband drei gelenkig miteinander verbundene Kniehebel aufweist.

13. Fensterführungsprofil (10) nach einem der vorhergehenden Ansprüche, dadurch gekennzeichnet, daß die Kniehebel-Gelenkanordnung (21) in ihrer Ausgangsstellung näherungsweise V-förmig in Richtung der Stirnseite (25) der Fensterscheibe (16) ausgerichtete Kniehebel (22, 23) aufweist, die durch ein im Bereich der Stirnseite der Fensterscheibe (16) angeordnetes Kniegelenk (24) verbunden sind.
